# EUROPÄISCHE PATENTSCHRIFT

(11) **EP 4 283 269 B1**
(45) Veröffentlichungstag und Bekanntmachung des Hinweises auf die Patenterteilung: **13.08.2025**
(21) Anmeldenummer: 23172316.4
(22) Anmeldetag: 09.05.2023
(51) Int. Cl.: G01K 1/14, G01K 15/00, G01K 3/00, G05D 3/00, G05D 23/00

(54) **VERFAHREN ZUM BETRIEB EINES TEMPERATURKALIBRATORS MIT KÜHLEINHEIT UND TEMPERATURKALIBRATOR MIT KÜHLEINHEIT**
METHOD FOR OPERATING A REFRIGERATION CHILLER TEMPERATURE CALIBRATOR AND REFRIGERATION CHILLER TEMPERATURE CALIBRATOR
PROCÉDÉ DE FONCTIONNEMENT D'UN CALIBRATEUR À TEMPÉRATURE DOTÉ D'UNE UNITÉ DE REFROIDISSEMENT ET CALIBRATEUR À TEMPÉRATURE DOTÉ D'UNE UNITÉ DE REFROIDISSEMENT

(30) Priorität: 25.05.2022 DE 102022113268
(43) Veröffentlichungstag der Anmeldung: 29.11.2023
(73) Patentinhaber: SIKA Dr.Siebert & Kühn GmbH & Co. KG., 34260 Kaufungen (DE)
(72) Erfinder: REHM-GUMBEL, Michael, 34305 Niedenstein (DE); METH, Thomas, 34260 Kaufungen (DE)
(74) Vertreter: Walther Bayer Faber Patentanwälte PartGmbB

(56) Entgegenhaltungen:
- US-A1- 2019 041 274

## Beschreibung

Die Erfindung betrifft ein Verfahren zum Betrieb eines Temperaturkalibrators zur Kalibrierung eines Temperatursensors, aufweisend einen Kalibrierblock, in den der Temperatursensor eingebracht wird, und aufweisend ein Heizmittel, mit dem der Kalibrierblock geheizt wird und aufweisend eine Kühleinheit, mit der der Kalibrierblock gekühlt wird. Die Erfindung betrifft weiterhin einen Temperaturkalibrator zur Kalibrierung eines Temperatursensors, der mit dem erfindungsgemäßen Verfahren betrieben werden kann.

### STAND DER TECHNIK

Aus der EP 2 074 374 B1 oder aus der EP 3 441 709 A1 sind Temperaturkalibratoren bekannt, mit denen Temperatursensoren kalibriert werden können, und die Temperaturkalibratoren weisen einen Kalibrierblock auf, in den der Temperatursensor eingebracht werden kann, und der Temperaturkalibrator weist ein Heizmittel und ferner eine Kühleinheit auf, um sowohl bei hohen Temperaturen deutlich über 0°C als auch bei Tieftemperaturen als unter 0°C zu kalibrieren.

Die Kühleinheit besitzt einen Sterlingmotor, der in der Regel mit Heliumgas betrieben wird. Werden Kalibriertemperaturen angefahren, die beispielsweise über 50° C liegen, so muss sichergestellt werden, dass das Heliumgas nicht über diese Temperatur erhitzt wird, da der Sterlingmotor damit Schaden nehmen kann. Um eine Schädigung des Sterlingmotors und damit der gesamten Kühleinheit zu vermeiden, werden sogenannte Thermosiphons eingesetzt, und die thermische Kopplung zwischen der Kühleinheit und dem Kalibrierblock wird über ein Kältemittel ermöglicht, mit dem der Thermosiphon betrieben wird. So erstreckt sich der Thermosiphon zwischen dem Kalibrierblock und der Kühleinheit, und an der sich an der Kühleinheit befindenden Seite des Thermosiphons wird das Kältemittel kondensiert und an der sich am Kalibrierblock befindenden Seite des Thermosiphons wird das Kältemittel wieder verdampft. Damit kann der Kalibrierblock auf die notwendigen Tiefentemperaturen gebracht werden, beispielsweise bis -60°C. Wird der Kalibrierblock mit dem Heizmittel geheizt und wird die Kühleinheit insofern ausgeschaltet, so kann das Kältemittel in eine externe Kammer ausweichen, sodass auch der Thermosiphon entsprechend unbeschädigt bleiben kann.

Für die thermische Trennung zwischen dem beheizten Kalibrierblock und der Kühleinheit bildet der Thermosiphon folglich ein Bindeglied, das eine Überhitzung des Sterlingmotors der Kühleinheit sicher verhindert, wenn das Kältemittel in die externe Kammer übergeleitet wird. Nachteilhafterweise ist jedoch die Verwendung eines Thermosiphons erforderlich, was den Aufbau des Temperaturkalibrators und die Durchführung des Verfahrens insbesondere beim Wechsel zwischen hohen Temperaturen und Tieftemperaturen aufwendig macht.

Aus der US 2019/0041274 A1 ist ein Temperaturkalibrierungssystem bekannt, umfassend eine Kalibrierungseinheit, in die ein zu kalibrierender Sensor eingesetzt werden kann; ein geschlossenes fluidisches System, das zum Entziehen von Wärme von der Kalibrierungseinheit gestaltet ist; insbesondere ausgeführt als ein Thermosyphon, eine Kühleinheit, die für eine Bewegung zwischen einer gekoppelten Position, an welcher die Kühleinheit an eine Komponente des geschlossenen fluidischen Systems anstößt, insbesondere an einen Kondensator des Thermosyphons, und einer entkoppelten Position, an welcher die Kühleinheit zu der Komponente des geschlossenen fluidischen Systems durch einen Zwischenabstand beabstandet ist, gestaltet ist; eine Steuereinheit; einen oder mehrere Linearaktoren, die mit der Steuereinheit gekoppelt sind; und einen Temperatursensor, der in einem Kondensator positioniert und mit der Steuereinheit gekoppelt ist, wobei der Temperatursensor so gestaltet ist, dass er ein Signal bereitstellt, das eine Temperatur des Kondensators anzeigt; wobei die Steuereinheit so gestaltet ist, dass sie den einen oder mehrere Linearaktoren betätigt, um zu bewirken, dass sich die Kühleinheit von der anderen der folgenden Positionen bewegt: von der entkoppelten Position an die gekoppelte Position oder von der gekoppelten Position an die entkoppelte Position; wobei die Steuereinheit so gestaltet ist, dass sie den einen oder mehrere Linearaktoren als Reaktion auf den Empfang eines Signals von dem Temperatursensor, das eine Temperatur anzeigt, die oberhalb einer ersten Schwellenwerttemperatur liegt, deaktiviert, und/oder dass sie den einen oder mehrere Linearaktoren als Reaktion auf den Empfang eines Signals von dem Temperatursensor, das eine Temperatur anzeigt, die unterhalb einer zweiten Schwellenwerttemperatur liegt, aktiviert. Nachteilhafterweise bedient sich dieses Temperaturkalibrierungssystem eines Thermosyphons.

### OFFENBARUNG DER ERFINDUNG

Die Aufgabe der Erfindung besteht in der Vereinfachung eines Verfahrens zum Betrieb eines Temperaturkalibrators gemäß Anspruch 1 und die weitere Aufgabe der Erfindung ist die Vereinfachung des Aufbaus eines Temperaturkalibrators gemäß Anspruch 7. Insbesondere ist es die Aufgabe der Erfindung, die Verwendung eines Thermosiphons bei Temperaturkalibratoren zu vermeiden, die geheizt und gekühlt werden können, und insofern ist es die Aufgabe der Erfindung, auch die Verwendung des externen Gefäßes zu vermeiden für das Kältemittel des Thermosiphons zu vermeiden.

Diese Aufgabe wird ausgehend von einem Verfahren gemäß Anspruch 1 und ausgehend von einem Temperaturkalibrator gemäß Anspruch 7 in Verbindung mit den jeweils kennzeichnenden Merkmalen gelöst. Vorteilhafte Weiterbildungen der Erfindung sind in den abhängigen Ansprüchen angegeben.

Die Erfindung schließt zur Ausführung des Verfahrens die folgenden erfindungsgemäßen Schritte mit ein: Ausbilden des Kalibrierblockes mit einer Kühlkontaktfläche, Einrichten eines Aktuators, mit dem die Kühleinheit beim Kühlen in Wärmekontakt mit der Kühlkontaktfläche des Kalibrierblockes gebracht wird und beim Heizen unter Bildung eines Luftspaltes räumlich von der Kühlkontaktfläche des Kalibrierblockes getrennt wird.

Bei der Ausführung des erfindungsgemäßen Verfahrens zum Betrieb des Temperaturkalibrators kann mit der Bildung des Luftspaltes die Kühleinheit vor Überhitzung geschützt werden, indem auf einfache Weise der Aktuator angesteuert wird, und bei entsprechend höheren Temperaturen des Kalibrierblocks kann der Luftspalt so vergrößert werden, dass die Kühleinheit nicht über eine kritische Temperatur erhitzt wird. So kann ein Thermosiphon zum Betrieb des Temperaturkalibrators auch bei tiefen Temperaturen deutlich unter 0°C entfallen, wodurch der Betrieb des Temperaturkalibrators insbesondere der technische Aufbau des Temperaturkalibrators vereinfacht wird und weniger Komponenten umfasst.

Vorteilhafterweise weist die Kühleinheit ein Kälteaggregat mit einem Kühlkopf auf, wobei das Kälteaggregat insbesondere einen Sterlingmotor umfasst, und wobei der Kühlkopf mit dem Kälteaggregat gekühlt werden kann. Dabei kann nur der Kühlkopf oder der Kühlkopf gemeinsam mit dem Kälteaggregat relativ zum Kalibrierblock mit dem Aktuator bewegt werden, um den Luftspalt herzustellen oder in der Größe zu verändern oder um den Wärmeleitkontakt zwischen dem Kalibrierblock und der Kühleinheit herzustellen.

Das Verfahren wird insbesondere mittels einer Steuerung ausgeführt, mit der der Luftspalt zwischen der Kühleinheit und dem Kalibrierblock geregelt wird, indem der Aktuator von der Steuerung angeregelt wird. Der Aktuator kann dabei auch eine Information über die Größe des Luftspalts an die Steuerung liefern, sodass die Steuerung eine Information darüber erhält, welches Maß der Luftspalt aktuell aufweist oder ob der Wärmeleitkontakt zwischen dem Kalibrierblock und Kühleinheit hergestellt ist.

Mit weiterem Vorteil wird ein Temperaturmessfühler eingerichtet, der insbesondere in, am oder im Bereich des Kühlkopfes angeordnet wird, wobei mit dem Temperaturmessfühler ein Temperaturwert aufgenommen und insbesondere an die Steuerung ausgegeben wird. Der Luftspalt kann dabei ausschließlich über die Temperaturinformation des Temperaturmessfühlers gesteuert werden oder die Steuerung berücksichtigt zusätzlich eine Information über die Größe des Luftspaltes, die wie obenstehend beschrieben beispielsweise von dem Aktuator ausgegeben wird.

Das erfindungsgemäße Verfahren kann damit weiter verbessert werden, wenn eine kritische Temperatur des Kühlkopfes definiert wird, wobei bei einem Überschreiten der kritischen Temperatur der Luftspalt erzeugt oder vergrößert wird, und dass bei einem Unterschreiten der kritischen Temperatur der Wärmeleitkontakt zwischen der Kühleinheit und dem Kalibrierblock wieder hergestellt wird. Die kritische Temperatur kann der Temperatur entsprechen, mit der die Kühleinheit und insbesondere das Kälteaggregat in Form eines Sterlingmotors maximal erhitzt werden darf. Insbesondere Sterlingmotoren, die Helium als Kältemittel aufweisen, sollten nicht über 50°C erhitzt werden, sodass diese Temperatur beispielsweise die kritische Temperatur bildet.

Der Aktuator kann so ausgeführt sein, dass der Luftspalt entweder erzeugt wird und damit einen festen Wert aufweist oder der Luftspalt wird eliminiert und es entsteht der Wärmeleitkontakt zwischen der Kühleinheit und dem Kalbrierblock, insbesondere mittels eines mittelbaren oder unmittelbaren Festkörperkontaktes. Dabei ist es aber auch denkbar, dass die Steuerung mittels des Aktuators den Luftspalt zwischen der Kühleinheit und dem Kalibrierblock vor, während und/oder nach einem Heizen des Kalibrierblockes so nachführt, dass die Kühleinheit und insbesondere der Kühlkopf auf der kritischen Temperatur oder leicht unterhalb der kritischen Temperatur bleibt. Je geringer die Temperaturdifferenz zwischen dem Kalibrierblock und der Kühleinheit ist, desto kleiner kann der Luftspalt gewählt und insbesondere nachgeführt werden.

Die Erfindung betrifft ferner einen Temperaturkalibrator zur Kalibrierung eines Temperatursensors, aufweisend einen Kalibrierblock, in dem der Temperatursensor einbringbar ist, und aufweisend ein Heizmittel, mit dem der Kalibrierblock heizbar ist und aufweisend eine Kühleinheit, mit der der Kalibrierblock kühlbar ist, wobei der Kalibrierblock eine Kühlkontaktfläche aufweist und ein Aktuator eingerichtet ist, mit dem ein Luftspalt zwischen der Kühlkontaktfläche des Kalibrierblockes und der Kühleinheit erzeugbar und/oder einstellbar ist.

Der Aktuator kann gemeinsam und/oder als Baueinheit mit der Kühleinheit ausgeführt sein oder der Aktuator weist eine Verbindung zur Kühleinheit auf, um diese räumlich zu verlagern. Der Aktuator und die Kühleinheit können auch baueinheitlich ausgeführt sein oder der Aktuator bildet ein bewegliches Bindeglied zwischen der Kühleinheit und dem Kalibrierblock. Insofern ist es auch möglich, dass der Aktuator an oder im Temperaturkalibrator angeordnet ist, und die Kühleinheit kann mit dem Aktuator relativ zum Kalibrierblock bewegt werden. Insofern ist es auch möglich, dass der Kalibrierblock relativ zur Kühleinheit verlagert oder bewegt wird.

Der Luftspalt ist dabei so einstellbar, dass beim Kühlen die Kühleinheit in Wärmekontakt mit dem Kalibrierblock bringbar ist, und dass beim Heizen der Luftspalt mittels eines räumlichen Trennens der Kühleinheit vom Kalibrierblock erzeugbar oder vergrößerbar ist. Zur Einstellung oder Regelung des Luftspaltes weist der Temperaturkalibrator und/oder die Kühleinheit eine Steuerung auf, mit der insbesondere der Aktuator angesteuert werden kann.

Die Kühleinheit weist vorteilhafterweise einen Kühlkopf auf, der mit dem Kalibrierblock in Wärmeleitkontakt bringbar ist, wobei auf dem Kühlkopf ein Spannring und/oder ein Isolierring angeordnet ist und/oder wobei der Wärmeleitkontakt über den Spannring ausgebildet ist. Damit kann der Kühlkopf entweder unmittelbar mit der Kühleinheit in Festkörperkontakt gebracht werden, oder die Bildung des Wärmeleitkontaktes erfolgt wenigstens mittelbar über ein weiteres Element, beispielsweise einen Spannring. Der Isolierring kann den Spannring außenseitig radial umlaufend umschließen, und der Isolierring weist vorteilhafterweise einen umlaufenden Topf oder Kragen auf, der in einen Ringspalt im Kalibrierblock eintaucht oder den Kalibrierblock umschließt, sodass der Kühlkopf der Kühleinheit im Wesentlichen isoliert bleibt, und zwar unabhängig vom Vorhandensein des Luftspaltes.

Mit weiterem Vorteil ist im oder am Kühlkopf ein Temperaturmessfühler angeordnet, insbesondere kann der Temperaturmessfühler im Spannring aufgenommen sein. Der Temperaturmessfühler kann dabei einen Temperaturwert an die Steuerung liefern, über den folglich der Luftspalt zwischen der Kühleinheit bzw. dem Kühlkopf und dem Kalibrierblock eingeregelt werden kann. Zudem Kann der Aktuator eine Wegemesseinheit umfassen, mittels der ein Wert des Luftspaltes an die Steuerung übermittelt werden kann.

Der Kalibrierblock kann mit weiterem Vorteil eine Kalibrierhülse umfassen oder diese bilden, sodass der Kontakt der Kühleinheit und insbesondere des Kühlkopfes vorzugsweise unmittelbar mit der Kalibrierhülse erfolgt. Das Heizmittel umschließt dabei beispielsweise die Kalibrierhülse oder ein Kalibriervolumen, dass den Aufnahmebereich für die Aufnahme der Kalibrierhülse im Kalibrierblock bildet, sodass bei einer Beheizung des Kalibrierblockes und insbesondere der Kalibrierhülse des Kalibrierblockes die Wärme unmittelbar in die Hülse eingetragen werden kann.

Der Aktuator kann auf verschiedene Weise eine Hubvorrichtung bilden. Beispielsweise kann der Aktuator einen Hubmagneten, eine Spindel-Mutter-Einheit, einen Schrittmotor, einen Piezomotor, eine Motor-GetriebeEinheit oder eine Pneumatik- oder Hydraulikeinheit aufweisen.

### BEVORZUGTES AUSFÜHRUNGSBEISPIEL DER ERFINDUNG

Weitere, die Erfindung verbessernde Maßnahmen werden nachstehend gemeinsam mit der Beschreibung eines bevorzugten Ausführungsbeispiels der Erfindung anhand der Figuren näher dargestellt. Es zeigt:
- Figur 1: einen Temperaturkalibrator mit einem Kalibrierblock, einer Kühleinheit sowie einem Aktuator, wobei zwischen dem Kalibrierblock und der Kühleinheit ein Wärmeleitkontakt vorherrscht,
- Figur 2: einen Temperaturkalibrator gemäß Figur 1, wobei zwischen der Kühleinheit und dem Kalibrator ein Luftspalt vorherrscht und
- Figur 3: die Ansicht eines Temperaturverlaufes des Kalibrierblockes sowie des Temperaturverlaufes der Kühleinheit über der Zeit, wobei ferner sowohl ein Heizbetrieb, ein Kühlbetrieb, sowie der eingestellte Spalt zwischen der Kühleinheit und dem Kalibrierblock über der Zeit aufgetragen sind.

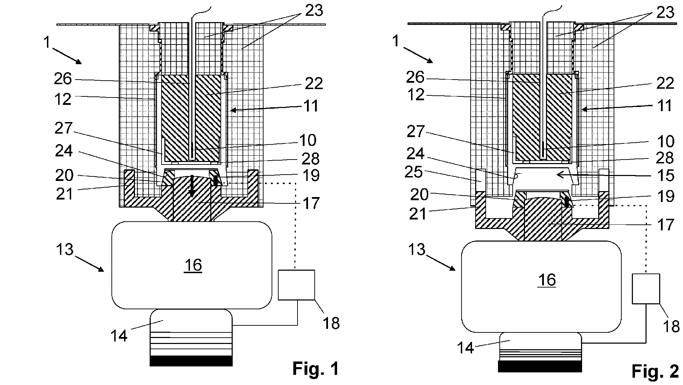

In den Figuren 1 und 2 ist in schematisierter Weise ein Temperaturkalibrator 1 gezeigt, und der Temperaturkalibrator 1 weist einen Kalibrierblock 11 auf, umfassend eine hohlzylinderförmiges Kalibriervolumen und eine in dieses eingesetzte Kalibrierhülse 22. Außenseitig am Kalibrierblock 11 befindet sich ein Heizmittel 12, beispielsweise in Form einer Heizfolie, wobei auch andere Formen von Heizmitteln, insbesondere Widerstandsheizungen, Anwendung finden können. Dabei ist der Kalibrierblock 11 ausgenommen einer Bodenseite von einer mehrere Isolierelemente umfassenden Isolierung 23 umgeben.

Bodenseitig weist der Kalibrierblock 11 eine Kühlkontaktfläche 24 auf, und mit der Kühlkontaktfläche 24 kann die Kühleinheit 13 in einen Wärmeleitkontakt gebracht werden. Hierfür weist die Kühleinheit 13 einen Kühlkopf 17 auf, der mittels eines auf dem Kühlkopf 17 aufgebrachten Spannringes 20 mit der Kühlkontaktfläche 24 in Kontakt gebracht werden kann, wie in Figur 1 gezeigt. Figur 2 zeigt hingegen einen Luftspalt 15 zwischen dem Kühlkopf 17 bzw. dem Spannring 20 und der Kühlkontaktfläche 24.

Um entweder den Wärmeleitkontakt gemäß Figur 1 oder den Luftspalt 15 gemäß Figur 2 zwischen dem Kühlkopf 17 bzw. dem Spannring 20 der Kühleinheit 13 und der Kühlkontaktfläche 24 des Kalibrierblocks 11 herzustellen, dient ein Aktuator 14, mit dem beispielhaft die Kühleinheit 13 und insofern auch der Kühlkopf 17 mit dem Spannring 20 auf- und abgefahren werden kann, um bei einem ansonsten ruhenden Kalibrierblock 11 den Spalt 15 zu bilden oder um den Wärmeleitkontakt mit der Kühlkontaktfläche 24 herzustellen. Der Aktuator 14 ist lediglich schematisch gezeigt, und dieser kann auf unterschiedliche Weise ausgeführt sein, insbesondere als Hubvorrichtung, die mit einer Steuerung 18 des Temperaturkalibrators 1 angesteuert werden kann, wobei insbesondere der Aktuator 14 und die Steuerung 18 Bestandteil des Temperaturkalibrators 1 sind.

Die Kühleinheit 13 weist einen Temperaturmessfühler 19 auf, der beispielhaft im Spannring 20 angeordnet gezeigt ist, und der Temperaturmessfühler 19 kann auch auf sonstige Weise im oder im Bereich des Kühlkopfes 17 angebracht sein. Der Temperaturmessfühler 19 stellt einen Temperaturwert bereit, der von der Steuerung 18 aufgenommen werden kann. In Abhängigkeit der so bestimmbaren Temperatur des Kühlkopfes 17 kann mittels der Steuerung 18 der Aktuator 14 so angesteuert werden, dass der Kühlkopf 17 und damit die Kühleinheit 13 eine kritische Temperatur nicht überschreitet. Je größer die Temperatur des Kalibrierblockes 11 ist, desto größer wird auch die Temperatur im oder am Kühlkopf 17, die mit dem Temperaturmessfühler 19 erfasst wird, und desto größer wird als Folge dessen auch der Luftspalt 15 über die Steuerung 18 eingestellt, indem der Aktuator 14 entsprechend angesteuert wird. Das Heizen des Kalibrierblockes 11 erfolgt dabei mittels des Heizmittels 12, das den Kalibrierblock 11 und damit auch die Kühlkontaktfläche 24 über eine kritische Temperatur erhitzen kann. Um eine Erhitzung des Kühlkopfes 17 über die kritische Temperatur zu vermeiden, beispielsweise 50°C, kann der Luftspalt 15 mittels des Aktuators 14 entsprechend vergrößert werden, um den Wärmeübergang vom aufgeheizten Kalibrierblock 11 in den Kühlkopf 17 und damit in die Kühleinheit 13 zu schwächen.

Um den Kühlkopf 17 herum ist ein etwa topfartig ausgeführter Isolierring 21 gezeigt, der in eine Ringnut 25 eintauchen kann, die in einer Isolierung 23 des Kalibrierblockes 11 eingebracht ist. Damit wird der Effekt der Eisbildung am Kühlkopf 17 minimiert, wenn diese Temperaturen unterhalb des Gefrierpunktes annimmt.

Der Kalibrierblock 11 wird im Wesentlichen gebildet durch ein Kalibriervolumen, in das die Kalibrierhülse 22 eingesetzt ist, wobei die Kalibrierhülse in an sich bekannter Weise aus dem Kalibriervolumen entnommen werden kann, um diese beispielsweise gegen unterschiedliche Ausführungsformen auszutauschen. Mittig in der Kalibrierhülse 22 ist eine Bohrung 26 eingebracht, in die der Temperatursensor 10 eingeführt ist. Im unteren in Richtung zur Kühlkontaktfläche 24 weisenden Bereich besitzt die Kalibrierhülse 22 einen geringeren Durchmesser, wodurch ein Ringspalt 27 gebildet ist, der zudem in einen Bodenspalt zwischen der Kalibrierhülse 22 und der Innenseite des Kühlblockes 11 übergeht. Der Bodenspalt wird beispielhaft erzeugt durch einen Ring oder einen beispielsweise umlaufenden Vorsprung 28, der den Bodenspalt unterseitig sicherstellt. So kann ein gleichmäßiges Temperaturprofil insbesondere bei einer Kühlung im Kalibrierblock 11 und insbesondere in der Kalibrierhülse 22 erzeugt werden. Insbesondere beim Kühlen des Kalibrierblockes 11 über die Kühlkontaktfläche 24 kühlt der Bereich, in dem der Temperatursensor 10 angeordnet ist, nicht übermäßig stark ab, während der obere restliche Bereich der Kalibrierhülse 22 noch eine höhere Temperatur aufweist.

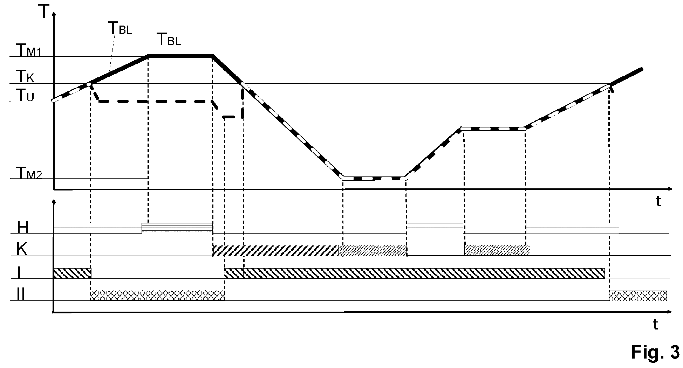

Figur 3 zeigt in einer schematischen Ansicht den Verlauf von Temperaturen des Kühlkopfes und des Kalibrierblockes über der Zeit, wobei die Temperatur auf der Ordinate mit T bezeichnet ist, während die Zeit auf der Abszisse mit t bezeichnet ist.

Das Diagramm der Temperatur über der Zeit zeigt zwei Temperaturverläufe, die gebildet werden durch die Temperatur T_{BL} des Kalibrierblockes und der Temperatur T_{KK} des Kühlkopfes. Wird gemäß dem beispielhaften Verlauf die Temperatur T_{BL} des Kühlblockes beginnend von einer Umgebungstemperatur T_{U} erwärmt auf eine erste Messtemperatur T_{M1}, so übersteigt die Messtemperatur T_{M1} die kritische Temperatur T_{K}. Bis zum Erreichen der kritischen Temperatur T_{K} befindet sich der Kühlkopf noch in einer Kontaktposition mit der Kühlkontaktfläche des Kalibrierblockes, die im Diagramm dargestellt ist durch Balken auf einer Position I in Festkörperkontakt zwischen dem Kalibrierblock und dem Kühlkopf. Bei Erreichen der kritischen Temperatur T_{K} verfährt der Aktuator den Kühlkopf so, dass der Luftspalt entsteht, gezeigt durch Balken in der Position II und insofern mit Luftspalt zwischen dem Kalibrierblock und dem Kühlkopf. Nach einer Haltedauer der Messtemperatur T_{M1} und einer weiteren Abkühlung des Kalibrierblockes wird die kritische Temperatur T_{K} wieder unterschritten, und die Position I mit Festkörperkontakt zwischen dem Kühlkopf und dem Kalibrierblock wird wieder erreicht, bis zu einer weiteren Messtemperatur T_{M2}, die als Kühltemperatur unterhalb der 0°C liegen kann.

Der weitere Verlauf zeigt wieder einen Anstieg der Temperatur des Kalibrierblockes T_{BL}, die über die Umgebungstemperatur T_{U} hinaus wieder die kritische Temperatur T_{K} erreicht und überschreitet, bei der schließlich wieder die Position II mit dem Luftspalt zwischen dem Kalibrierblock und dem Kühlkopf eingestellt wird.

Korrespondierend zum Temperaturverlauf und korrespondierend zum eingestellten Luftspalt oder zum eingestellten Festkörperkontakt erfolgt ein Heizbetrieb H, gekennzeichnet durch den Balkenverlauf bei H, und beim Kühlen erfolgt im Kühlbetrieb K ein Balkenverlauf bei K in einem Nebendiagramm.

Mit der aufgezeigten Einstellung der beiden Positionen Festkörperkontakt I und Luftspalt II wird deutlich, dass der Kühlkopf die kritische Temperatur T_{K} nicht überschreiten kann, da immer dann, wenn der Kalibrierblock die kritische Temperatur überschreitet, der Festkörperkontakt gelöst wird und der Luftspalt eingestellt wird.

Damit wird auf wirkungsvolle Weise eine Schädigung der Kühleinheit, umfassend einen Sterlingmotor vermieden, obwohl es keines Thermosyphons zwischen der Kühleinheit und dem Kalibrierblock mehr bedarf.

### Bezugszeichenliste:

- 1: Temperaturkalibrator

- 10: Temperatursensor
- 11: Kalibrierblock
- 12: Heizmittel
- 13: Kühleinheit
- 14: Aktuator
- 15: Luftspalt
- 16: Kälteaggregat
- 17: Kühlkopf
- 18: Steuerung
- 19: Temperaturmessfühler
- 20: Spannring
- 21: Isolierring
- 22: Kalibrierhülse
- 23: Isolierung
- 24: Kühlkontaktfläche
- 25: Ringnut
- 26: Bohrung
- 27: Ringspalt
- 28: Vorsprung

- T: Temperatur
- T_{K}: kritische Temperatur
- T_{BL}: Temperatur des Kalibrierblockes
- TKK: Temperatur des Kühlkopfes
- T_{U}: Umgebungstemperatur
- T_{M1}: Messtemperatur
- T_{M2}: Messtemperatur
- t: Zeit
- I: Position für Festkörperkontakt
- II: Position für Luftspalt
- H: Heizbetrieb
- K: Kühlbetrieb

## Patentansprüche

1. Verfahren zum Betrieb eines Temperaturkalibrators (1) zur Kalibrierung eines Temperatursensors (10), aufweisend einen Kalibrierblock (11), in den der Temperatursensor (10) einbracht wird, und aufweisend ein Heizmittel (12), mit dem der Kalibrierblock (11) geheizt wird und aufweisend eine Kühleinheit (13), mit der der Kalibrierblock (11) gekühlt wird,
wobei
- der Kalibrierblock (11) mit einer Kühlkontaktfläche (24) ausgebildet wird, und
- ein Aktuator (14) eingerichtet wird, mit dem die Kühleinheit (13)
- beim Kühlen in Wärmeleitkontakt mit der Kühlkontaktfläche (24) des Kalibrierblockes (11) gebracht wird und
- beim Heizen unter Bildung eines Luftspaltes (15) räumlich von der Kühlkontaktfläche (24) des Kalibrierblockes (11) getrennt wird.

2. Verfahren nach Anspruch 1,
**dadurch gekennzeichnet,**
**dass** die Kühleinheit (13) ein Kälteaggregat (16) mit einen Kühlkopf (17) aufweist, der mit dem Kälteaggregat (16) kühlbar ist, wobei wenigstens der Kühlkopf (17) oder der Kühlkopf (17) gemeinsam mit dem Kälteaggregat (16) relativ zum Kalibrierblock (11) mit dem Aktuator (14) bewegt wird bzw. werden.

3. Verfahren nach Anspruch 1 oder 2,
**dadurch gekennzeichnet,**
**dass** eine Steuerung (18) eingerichtet ist, mit der der Luftspalt (15) zwischen der Kühleinheit (13) und dem Kalibrierblock (11) geregelt wird, indem der Aktuator (14) mittels der Steuerung (18) angeregelt wird.

4. Verfahren nach einem der Ansprüche 1 bis 3,
**dadurch gekennzeichnet,**
**dass** ein Temperaturmessfühler (19) eingerichtet ist, insbesondere im, am oder im Bereich des Kühlkopfes (17), wobei mit dem Temperaturmessfühler (19) ein Temperaturwert aufgenommen und insbesondere an die Steuerung (18) ausgegeben wird.

5. Verfahren nach einem der vorgenannten Ansprüche,
**dadurch gekennzeichnet,**
**dass** eine kritische Temperatur (Tk) des Kühlkopfes (17) definiert wird, wobei bei einem Überschreiten der kritischen Temperatur der Luftspalt (15) erzeugt oder vergrößert wird und dass bei einem Unterschreiten der kritischen Temperatur (Tk) der Wärmeleitkontakt zwischen der Kühleinheit (13) und dem Kalibrierblock (11) wieder hergestellt wird.

6. Verfahren nach einem der vorgenannten Ansprüche,
**dadurch gekennzeichnet,**
**dass** die Steuerung (18) mittels des Aktuators (14) den Luftspalt (15) zwischen der Kühleinheit (13) und dem Kalibrierblock (11) vor, während und/oder nach einem Heizen des Kalibrierblockes (11) so nachführt, dass die Kühleinheit (13) und insbesondere der Kühlkopf (17) auf der kritischen Temperatur oder leicht unterhalb der kritischen Temperatur bleibt.

7. Temperaturkalibrator (1) zur Kalibrierung eines Temperatursensors (10), aufweisend einen Kalibrierblock (11), in den der Temperatursensor (10) einbringbar ist, und aufweisend ein Heizmittel (12), mit dem der Kalibrierblock (11) heizbar ist und aufweisend eine Kühleinheit (13) mit der der Kalibrierblock (11) kühlbar ist,
wobei
- der Kalibrierblock (11) eine Kühlkontaktfläche (24) aufweist, und
- ein Aktuator (14) eingerichtet ist, mit dem ein Luftspalt (15) zwischen der Kühlkontaktfläche (24) des Kalibrierblockes (11) und der Kühleinheit (13) erzeugbar und/oder einstellbar ist.

8. Temperaturkalibrator (1) nach Anspruch 7,
**dadurch gekennzeichnet,**
**dass** der Luftspalt (15) so einstellbar ist, dass beim Kühlen die Kühleinheit (13) in Wärmeleitkontakt mit dem Kalibrierblock (11) bringbar ist und dass beim Heizen der Luftspalt (15) mittels eines räumlichen Trennens der Kühleinheit (13) vom Kalibrierblock (11) erzeugbar oder vergrößerbar ist.

9. Temperaturkalibrator (1) nach Anspruch 7 oder 8,
**dadurch gekennzeichnet,**
**dass** die Kühleinheit (13) einen Kühlkopf (17) aufweist, der mit dem Kalibrierblock (11) in Wärmeleitkontakt bringbar ist, wobei auf dem Kühlkopf (17) ein Spannring (20) und/oder ein Isolierring (21) angeordnet ist und/oder wobei der Wärmeleitkontakt über den Spannring (20) ausgebildet ist.

10. Temperaturkalibrator (1) nach einem der Ansprüche 7 bis 9,
**dadurch gekennzeichnet,**
**dass** im oder am Kühlkopf (17) ein Temperaturmessfühler (19) angeordnet ist und/oder wobei der Temperaturmessfühler (19) im Spannring (20) angeordnet ist.

11. Temperaturkalibrator (1) nach einem der Ansprüche 7 bis 10, **dadurch gekennzeichnet,**
**dass** der Aktuator (14) eine Hubvorrichtung und/oder einen Hubmagneten und/oder eine Spindel-Mutter-Einheit und/oder einen Schrittmotor und/oder einen Piezomotor und/oder eine Motor-Getriebe-Einheit und/oder eine Pneumatik- oder Hydraulikeinheit aufwiest.

## Claims

1. A method of operating a temperature calibrator (1) for calibrating a temperature sensor (10), comprising a calibration block (11) into which the temperature sensor (10) is inserted, and comprising a heating means (12) with which the calibration block (11) is heated and comprising a cooling unit (13) with which the calibration block (11) is cooled,
wherein
- the calibration block (11) is formed with a cooling contact surface (24), and
- an actuator (14) is provided, with which the cooling unit (13)
- is brought into heat-conducting contact with the cooling contact surface (24) of the calibration block (11) during cooling, and
- is spatially separated from the cooling contact surface (24) of the calibration block (11) during heating while forming an air gap (15).

2. Method according to claim 1,
**characterised in that**
the cooling unit (13) has a cooling assembly (16) with a cooling head (17) which can be cooled with the cooling assembly (16), wherein at least the cooling head (17) or the cooling head (17) together with the cooling assembly (16) is or are moved relative to the calibration block (11) with the actuator (14).

3. Method according to claim 1 or 2,
**characterised in that**,
a controller (18) is provided with which the air gap (15) between the cooling unit (13) and the calibration block (11) is regulated by controlling the actuator (14) by means of the controller (18).

4. Method according to one of claims 1 to 3,
**characterised in that**
a temperature sensor (19) is installed, in particular in, on or in the region of the cooling head (17), wherein a temperature value is recorded with the temperature sensor (19) and in particular output to the controller (18).

5. Method according to one of the preceding claims,
**characterised in that**
a critical temperature (Tk) of the cooling head (17) is defined, the air gap (15) being generated or enlarged when the critical temperature is exceeded, and **in that** the heat conducting contact between the cooling unit (13) and the calibration block (11) is re-established when the temperature falls below the critical temperature (Tk).

6. Method according to one of the preceding claims,
**characterised in that**
the controller (18) adjusts the air gap (15) between the cooling unit (13) and the calibration block (11) by means of the actuator (14) before, during and/or after heating of the calibration block (11) in such a way that the cooling unit (13) and in particular the cooling head (17) remain at the critical temperature or slightly below the critical temperature.

7. Temperature calibrator (1) for calibrating a temperature sensor (10), having a calibration block (11) into which the temperature sensor (10) can be inserted, and having a heating means (12) with which the calibration block (11) can be heated and having a cooling unit (13) with which the calibration block (11) can be cooled,
wherein
- the calibration block (11) has a cooling contact surface (24), and
- an actuator (14) is provided, with which an air gap (15) between the cooling contact surface (24) of the calibration block (11) and the cooling unit (13) can be produced and/or adjusted.

8. Temperature calibrator (1) according to claim 7,
**characterised in that**
the air gap (15) is adjustable in such a way that during cooling the cooling unit (13) can be brought into heat-conducting contact with the calibration block (11) and that during heating the air gap (15) can be produced or enlarged by means of a spatial separation of the cooling unit (13) from the calibration block (11).

9. Temperature calibrator (1) according to claim 7 or 8,
**characterised in that**
the cooling unit (13) has a cooling head (17) which can be brought into heat-conducting contact with the calibration block (11), wherein a clamping ring (20) and/or an insulating ring (21) is arranged on the cooling head (17) and/or wherein the heat-conducting contact is formed via the clamping ring (20).

10. Temperature calibrator (1) according to one of claims 7 to 9,
**characterised in that**
a temperature sensor (19) is arranged in or on the cooling head (17) and/or wherein the temperature sensor (19) is arranged in the clamping ring (20).

11. Temperature calibrator (1) according to one of claims 7 to 10,
**characterised in that**
the actuator (14) comprises a lifting device and/or a lifting magnet and/or a spindle-nut unit and/or a stepper motor and/or a piezo motor and/or a motor-gear unit and/or a pneumatic or hydraulic unit.

## Revendications

1. Procédé de fonctionnement d'un calibrateur de température (1) pour calibrer un capteur de température (10), présentant un bloc de calibrage (11) dans lequel le capteur de température (10) est placé, et présentant un moyen de chauffage (12) avec lequel le bloc de calibrage (11) est chauffé et présentant une unité de refroidissement (13) avec laquelle le bloc de calibrage (11) est refroidi,
où
- le bloc de calibrage (11) est formé avec une surface de contact de refroidissement (24), et
- un actionneur (14) est mis en place, avec lequel l'unité de refroidissement (13)
- est amenée en contact de conduction thermique avec la surface de contact de refroidissement (24) du bloc de calibrage (11) lors du refroidissement, et
- lors du chauffage, elle est séparée spatialement de la surface de contact de refroidissement (24) du bloc de calibrage (11) en formant un entrefer (15).

2. Procédé selon la revendication 1,
**caractérisé en ce que**,
l'unité de refroidissement (13) comporte un groupe frigorifique (16) avec une tête de refroidissement (17) qui peut être refroidie avec le groupe frigorifique (16), au moins la tête de refroidissement (17) ou la tête de refroidissement (17) étant déplacée(s) conjointement avec le groupe frigorifique (16) par rapport au bloc de calibrage (11) avec l'actionneur (14).

3. Procédé selon la revendication 1 ou 2,
**caractérisé en ce que**,
qu'une commande (18) est aménagée, avec laquelle l'entrefer (15) entre l'unité de refroidissement (13) et le bloc de calibrage (11) est réglé, **en ce que** l'actionneur (14) est réglé au moyen de la commande (18).

4. Procédé selon l'une des revendications 1 à 3,
**caractérisé en ce que**,
sonde de mesure de température (19) est aménagée, notamment dans, sur ou dans la zone de la tête de refroidissement (17), une valeur de température étant enregistrée avec la sonde de mesure de température (19) et étant notamment transmise à la commande (18).

5. Procédé selon l'une des revendications précédentes,
**caractérisé en ce que**,
qu'une température critique (Tk) de la tête de refroidissement (17) est définie, l'entrefer (15) étant créé ou agrandi lorsque la température critique est dépassée, et **en ce que** le contact de conduction thermique entre l'unité de refroidissement (13) et le bloc de calibrage (11) est rétabli lorsque la température critique (Tk) n'est pas atteinte.

6. Procédé selon l'une des revendications précédentes,
**caractérisé en ce que**,
la commande (18) ajuste, au moyen de l'actionneur (14), l'entrefer (15) entre l'unité de refroidissement (13) et le bloc de calibrage (11) avant, pendant et/ou après un chauffage du bloc de calibrage (11) de telle sorte que l'unité de refroidissement (13) et en particulier la tête de refroidissement (17) restent à la température critique ou légèrement en dessous de la température critique.

7. Calibrateur de température (1) pour calibrer un capteur de température (10), présentant un bloc de calibrage (11), dans lequel le capteur de température (10) peut être introduit, et présentant un moyen de chauffage (12), avec lequel le bloc de calibrage (11) peut être chauffé et présentant une unité de refroidissement (13) avec laquelle le bloc de calibrage (11) peut être refroidi,
où
- le bloc de calibrage (11) présente une surface de contact de refroidissement (24), et
- un actionneur (14) est aménagé, avec lequel un entrefer (15) peut être généré et/ou réglé entre la surface de contact de refroidissement (24) du bloc de calibrage (11) et l'unité de refroidissement (13).

8. Calibrateur de température (1) selon la revendication 7,
**caractérisé en ce que**,
l'entrefer (15) est réglable de telle sorte que, lors du refroidissement, l'unité de refroidissement (13) peut être amenée en contact de conduction thermique avec le bloc de calibrage (11) et que, lors du chauffage, l'entrefer (15) peut être généré ou agrandi au moyen d'une séparation spatiale de l'unité de refroidissement (13) du bloc de calibrage (11).

9. Calibrateur de température (1) selon la revendication 7 ou 8,
**caractérisé en ce que**,
l'unité de refroidissement (13) présente une tête de refroidissement (17) qui peut être amenée en contact de conduction thermique avec le bloc de calibrage (11), une bague de serrage (20) et/ou une bague isolante (21) étant disposée sur la tête de refroidissement (17) et/ou le contact de conduction thermique étant réalisé par l'intermédiaire de la bague de serrage (20).

10. Calibrateur de température (1) selon l'une des revendications 7 à 9, **caractérisé en ce que**,
qu'une sonde de mesure de température (19) est disposée dans ou sur la tête de refroidissement (17) et/ou dans lequel la sonde de mesure de température (19) est disposée dans l'anneau de serrage (20).

11. Calibrateur de température (1) selon l'une des revendications 7 à 10, **caractérisé en ce que**,
l'actionneur (14) comprend un dispositif de levage et/ou un aimant de levage et/ou un ensemble vis-écrou et/ou un moteur pas à pas et/ou un moteur piézoélectrique et/ou un ensemble moteur-réducteur et/ou une unité pneumatique ou hydraulique.
